# DEMANDE DE BREVET EUROPEEN

(11) **EP 1 411 228 A1**
(43) Date de publication de la demande: **21.04.2004**
(21) Numéro de dépôt: 03300148.8
(22) Date de dépôt: 13.10.2003
(51) Int. Cl.: F02D 41/02, F02D 41/40, F01N 3/035

(54) **Procédé de régénération d'un filtre à particules et dispositif de mise en oeuvre**

(30) Priorité: 18.10.2002 FR 0212993
(71) Demandeur: Renault s.a.s., 92100 Boulogne Billancourt (FR)
(72) Inventeur: Baux, Antoine, 75015 Paris (FR)

(57) **Abrégé**

L'invention concerne un procédé de régénération d'un filtre à particules dans le circuit d'échappement d'un moteur à combustion interne, comprenant notamment des moyens d'oxydation, un capteur de température et un calculateur électronique de contrôle moteur, tel que la régénération du filtre à particules (6) étant provoquée par post-injection d'une quantité (Qₚₒₛₜ) de carburant après l'injection principale (Q) produisant du couple moteur, il consiste à réguler ladite quantité post-injectée (Qₚₒₛₜ) de manière à asservir la température (Tₑ) des gaz d'échappement mesurée par un capteur (9) à une température de consigne (T_{c}) de combustion. Si la température (Tₑ) des gaz d'échappement est inférieure, respectivement supérieure, à la température de consigne (T_{c}), le calculateur (4) commande une augmentation, respectivement une diminution, de la quantité de carburant (Qₚₒₛₜ) post-injectée pour élever, respectivement abaisser, la température (Tₑ) jusqu'à la valeur de consigne (T_{c}).

Elle concerne également un dispositif de mise en oeuvre du procédé.

Application aux véhicules automobiles.

## Description

La présente invention concerne un procédé de régénération d'un filtre à particules dans le circuit d'échappement d'un moteur à combustion interne et un dispositif de mise en oeuvre de ce procédé. Elle vise plus particulièrement à assurer la régénération du filtre à particules, classique ou catalytique, quelles que soient les dispersions de production des moteurs, notamment de véhicules automobiles, tout en évitant sa destruction par une thermique trop élevée.

Un filtre à particules inséré dans le circuit d'échappement des gaz d'un moteur thermique est un moyen connu pour éliminer les particules de suie émises par les gaz d'échappement, et ainsi pour diminuer la pollution d'un tel moteur. Un filtre à particules catalytique présente une paroi intérieure recouverte d'une couche de matériau imprégnée de métaux précieux, appelée « wash coat » et assurant une fonction d'oxydation destinée à diminuer la température de combustion des particules de suie.

Pour assurer le fonctionnement d'un filtre à particules catalytique et éviter son colmatage par les suies, ce qui dégraderait les performances du moteur, il est nécessaire de procéder périodiquement à une régénération qui consiste à brûler les suies. Cette combustion des suies est provoquée par élévation de la température des gaz d'échappement aux environs de 600°C, obtenue en dégradant le rendement moteur par des moyens appropriés d'aide à la régénération.

Un procédé pour augmenter la température des gaz d'échappement consiste à injecter une quantité supplémentaire de carburant dans au moins une des chambres de combustion sous la forme d'une post-injection, c'est-à-dire une injection supplémentaire de carburant dans au moins une des chambres de combustion, effectuée en phase de détente et produisant une augmentation de la teneur en hydrocarbures et en monoxyde de carbone à l'échappement.

Ainsi, la régénération d'un filtre à particules catalytique utilise soit l'exothermicité d'un catalyseur d'oxydation généralement placé en amont du filtre à particules et celle de la phase catalytique dont est revêtu le filtre à particules catalytique et qui réalise la fonction d'oxydation des hydrocarbures et du monoxyde de carbone non traités par le catalyseur d'oxydation, soit l'exothermicité de la phase d'oxydation du filtre à particules catalytique lorsqu'il n'y a pas de catalyseur d'oxydation en amont de celui-ci.

La mise en action des différents moyens d'aide à la régénération est pilotée par le calculateur de contrôle moteur qui détermine, en fonction de plusieurs paramètres dont le chargement en suies du filtre à particules, l'instant de la régénération ainsi que sa durée et les paramètres d'injection pendant cette phase, tels que le nombre d'injections, le débit, la durée et le phasage de chaque injection.

Contrairement au cas des filtres à particules classiques, la plage de températures dans laquelle il faut piloter la régénération d'un filtre à particules catalytique est relativement étroite. En dessous de 570°C, il ne peut y avoir de combustion, et au-dessus de 650°C, il y a un risque de dégradation de la phase catalytique du filtre à particules. De plus, la vitesse de combustion des suies varie fortement entre 570°C et 650°C. Ceci oblige à piloter la température du filtre à particules avec une précision de plus ou moins 20°C. Malheureusement, en raison des dispersions du système d'injection, c'est-à-dire des injecteurs ou de la cible du volant moteur notamment, on peut atteindre, d'un moteur à un autre pour un même réglage des paramètres d'injection, des dispersions de ±50°C en température avant filtre.
Le but de la présente invention est de permettre la régénération d'un filtre à particules, classique ou catalytique, en respectant la plage de températures nécessaire.

Pour cela, un premier objet de l'invention est un procédé de régénération d'un filtre à particules de type classique ou catalytique, dans le circuit d'échappement d'un moteur à combustion interne, comprenant des moyens réalisant une fonction d'oxydation dans la ligne d'échappement, un capteur de température placé en aval desdits moyens d'oxydation et délivrant des informations à un calculateur électronique de contrôle moteur pilotant entre autres le débit d'air et l'injection de carburant dans le moteur, caractérisé en ce que la régénération du filtre à particules est provoquée par post-injection d'une quantité de carburant après l'injection principale, et le procédé consiste à réguler ladite quantité post-injectée de manière à asservir la température des gaz d'échappement mesurée par un capteur à une température de consigne.

Selon une autre caractéristique de l'invention, si la température des gaz d'échappement délivrée par le capteur est inférieure à la température de consigne, le calculateur de contrôle moteur commande une augmentation de la quantité de carburant post-injectée, pour élever la température des gaz d'échappement jusqu'à la valeur de consigne de combustion.

Selon une autre caractéristique de l'invention, si la température des gaz d'échappement délivrée par le capteur est supérieure à la température de consigne, le calculateur de contrôle moteur commande une diminution de la quantité de carburant post-injectée pour abaisser la température des gaz d'échappement jusqu'à la valeur de consigne de combustion.

Un second objet est un dispositif de mise en oeuvre du procédé de régénération d'un filtre à particules, dans le circuit d'échappement d'un moteur à combustion interne, comprenant des moyens réalisant une fonction d'oxydation dans la ligne d'échappement, un capteur de température placé en aval desdits moyens d'oxydation et délivrant des informations à un calculateur électronique de contrôle moteur pilotant entre autres le débit d'air et l'injection de carburant dans le moteur, caractérisé en ce qu'il comprend un comparateur de la température à l'échappement du moteur, mesurée par un capteur en aval des moyens d'oxydation, soit en aval du catalyseur d'oxydation, soit en aval du filtre à particules catalytique lorsque il n'y a pas de catalyseur d'oxydation en amont du filtre catalytique, avec une température de consigne, l'écart entre ces deux valeurs étant envoyé à un régulateur de la quantité de carburant post-injecté en fonction de cet écart afin que la température délivrée par le capteur tende vers la valeur de consigne, qui est déterminée par le calculateur.

D'autres caractéristiques et avantages de l'invention apparaîtront à la lecture de la description de deux exemples de procédés de régénération d'un filtre à particules catalytique, illustrée pour les figures suivantes qui sont :
- les figures 1a et 1b : deux schémas du circuit d'échappement d'un moteur thermique équipé d'un filtre à particules, selon deux variantes ;
- les figures 2a et 2b : la quantité de carburant en fonction de l'angle du vilebrequin, respectivement lors d'une phase d'injection nominale, et lors d'une phase de régénération par post-injection ;
- la figure 3 : le schéma de principe d'un procédé de régulation de l'injection en phase de régénération d'un filtre à particules par post-injection.

Comme le montre le schéma de la figure 1a, un moteur à combustion interne 1, de type Diesel ou à injection d'essence, reçoit de l'air d'un circuit d'admission 2 et du carburant d'un ensemble d'injecteurs 3, le débit d'air Dₐ et la quantité de carburant injecté Qᵢ étant commandés par un calculateur électronique 4 de contrôle moteur qui gère la loi d'injection du carburant dans les cylindres du moteur, en particulier en fonction de la position de la pédale d'accélérateur 10.

Un circuit 5 d'échappement des gaz émis à la suite de la combustion du mélange air-carburant comporte, selon une première variante, un filtre à particules 6a classique ou catalytique, destiné à piéger les particules de suie contenues dans les gaz d'échappement. Pour un meilleur fonctionnement du filtre à particules, un catalyseur 7 d'oxydation est placé en amont de celui-ci dans le circuit d'échappement 5. Un capteur 8 de pression différentielle est placé de part et d'autre du filtre à particules et au moins un capteur 9 de température est placé en aval du catalyseur pour délivrer des informations au calculateur 4 de contrôle moteur permettant de mesurer le colmatage du filtre à particules.

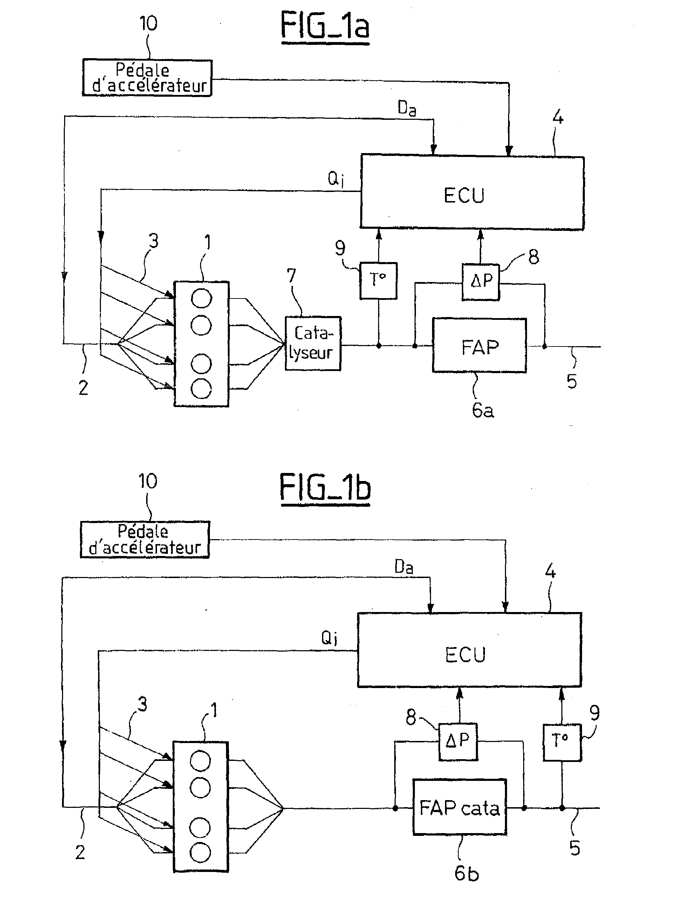

Dans le cadre de l'utilisation d'un filtre à particules catalytique 6b sans catalyseur en amont selon la seconde variante de la figure 1b, celui-ci peut être placé en sortie moteur en lieu et place du catalyseur d'oxydation dont il remplit la fonction. Dans ce cas, le capteur 8 de pression différentielle est toujours situé aux bornes du filtre à particules catalytique mais le capteur 9 de température se situe en aval du filtre.

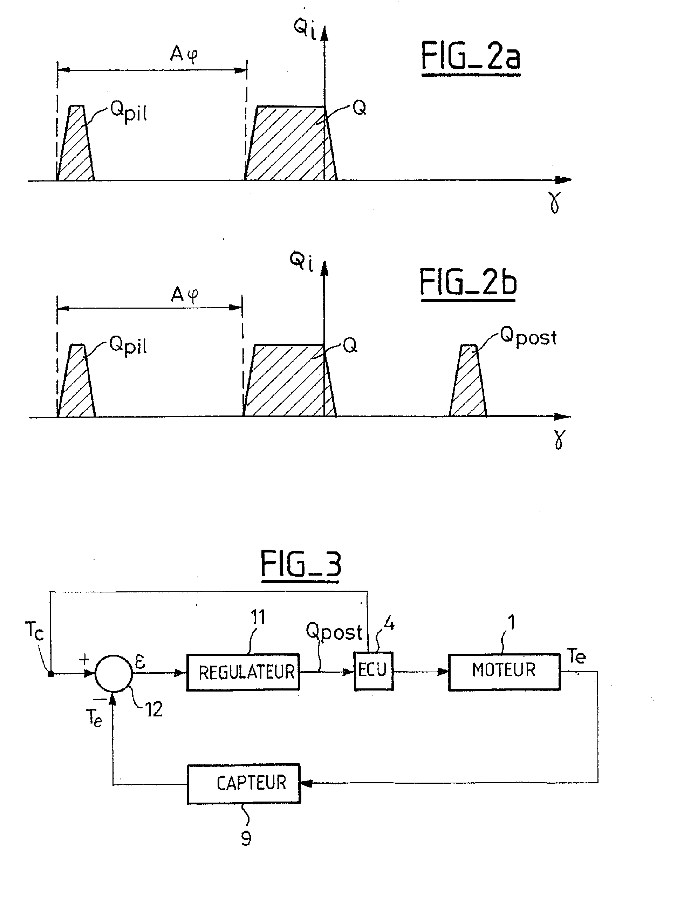

Selon le diagramme de la figure 2a, qui représente la quantité Qᵢ de carburant injecté lors du fonctionnement normal du moteur, une quantité principale Q de carburant est injectée au niveau d'un point particulier de l'angle γ du vilebrequin, qui peut être le PMH. Une quantité pilote Qₚᵢₗ prédéterminée est injectée avant la quantité principale Q en avance de phase Aϕ, pour diminuer le bruit lié à la combustion de ladite quantité principale qui produit du couple et qui correspond à la plus grosse quantité de débit injecté.

Lorsque les capteurs de température et de pression, placés en amont et en aval du filtre à particules, délivrent au calculateur de contrôle moteur des informations représentatives du niveau de colmatage du filtre à particules nécessitant une régénération, le calculateur prend alors en compte le niveau de chargement en suies du filtre à particules et le point de fonctionnement du moteur pour commander une phase de combustion des particules de suies.

Une solution actuelle mise en oeuvre pour assurer la régénération d'un filtre à particules, quand la température des gaz d'échappement en amont du filtre est inférieure à la température de combustion des particules, consiste à injecter une quantité supplémentaire Qₚₒₛₜ de carburant après l'injection principale comme le montre la figure 2b. Alors que cette dernière produit du couple moteur, la post-injection Qₚₒₛₜ n'en produit pas et est destinée à subir une combustion dans la ligne d'échappement au niveau des moyens d'oxydation, c'est-à-dire soit dans le catalyseur d'oxydation soit sur la phase catalytique du filtre à particules catalytique, et fournit de l'énergie thermique provoquant une élévation de la température des gaz d'échappement.

Une première caractéristique de l'invention réside dans ta régulation de la quantité de carburant post-injectée, pendant la phase de régénération du filtre à particules, en fonction de l'écart entre la température des gaz d'échappement mesurée et la température de consigne, déterminée par le calculateur, nécessaire à une combustion rapide des particules de suie, colmatant le filtre à particules, dans le but d'asservir la température des gaz d'échappement à la valeur de consigne.

La figure 3 représente le schéma de principe d'un procédé de régulation de post-injection de carburant à partir de l'information sur la température à l'échappement. La température Tₑ mesurée à l'échappement du moteur 1, par un capteur 9 en aval des moyens d'oxydation, soit en aval du catalyseur d'oxydation, soit en aval du filtre à particules catalytique lorsque il n'y a pas de catalyseur d'oxydation en amont du filtre catalytique, est comparée à une température de consigne T_{c} de combustion, dans un comparateur 12. L'écart ε entre ces deux valeurs est envoyé à un régulateur 11 qui régule la quantité de carburant post-injecté Qₚₒₛₜ en fonction de cet écart afin que la température Tₑ délivrée par le capteur 9 tende vers la valeur de consigne T_{c}. La température de consigne est déterminée par le calculateur 4 de façon à être comprise entre la température minimale permettant d'assurer la combustion totale des suies dans un délai raisonnable, par exemple 15 minutes, et la température maximale que peut supporter le filtre à particules sans être dégradé.

Si la température Tₑ délivrée par le capteur est inférieure à la température de consigne T_{c}, le calculateur électronique 4 va commander une augmentation de la quantité de post-injection Qₚₒₛₜ pour élever la température des gaz d'échappement jusqu'à la température des suies.

Si la température Tₑ est supérieure à cette consigne T_{c}, le calculateur électronique va au contraire réduire le débit de post-injection Qₚₒₛₜ pour diminuer la température des gaz d'échappement.

Grâce à l'invention, la régénération d'un filtre à particules, de type classique ou catalytique, est réalisée quelques soient les dispersions de production des moteurs tout en évitant sa destruction par une thermique trop élevée.

## Revendications

1. Procédé de régénération d'un filtre à particules dans le circuit d'échappement d'un moteur à combustion interne, comprenant un filtre à particule catalytique réalisant une fonction d'oxydation dans la ligne d'échappement, un capteur de température placé en aval dudit filtre et délivrant des informations à un calculateur électronique de contrôle moteur pilotant entre autres le débit d'air et l'injection de carburant dans le moteur, la régénération du filtre à particules (6) étant provoquée par post-injection d'une quantité (Qₚₒₛₜ) de carburant après l'injection principale (Q) produisant du couple moteur, **caractérisé en ce qu'**il consiste à réguler ladite quantité post-injectée (Qₚₒₛₜ) en fonction de l'écart (ε) entre la température (Tₑ) des gaz d'échappement mesurée par le capteur (9) et une température de consigne (T_{c}) de combustion, déterminée par le calculateur électronique (4) de façon à être inférieure à la température de destruction du filtre à particules et supérieure à la température de combustion des suies qu'il contient.

2. Procédé de régénération selon la revendication 1, **caractérisé en ce que**, si la température (Tₑ) des gaz d'échappement délivrée par le capteur est inférieure à la température de consigne (T_{c}), le calculateur (4) de contrôle moteur commande une augmentation de la quantité de carburant (Qₚₒₛₜ) post-injectée, pour élever la température des gaz d'échappement jusqu'à la valeur de consigne (T_{c}) de combustion.

3. Procédé de régénération selon la revendication 1, **caractérisé en ce que**, si la température (Tₑ) des gaz d'échappement délivrée par le capteur est supérieure à la température de consigne (T_{c}), le calculateur (4) de contrôle moteur commande une diminution de la quantité de carburant (Qₚₒₛₜ) post-injectée pour diminuer la température des gaz d'échappement jusqu'à la valeur de consigne (T_{c}) de combustion.

4. Dispositif de mise en oeuvre du procédé de régénération d'un filtre à particules selon l'une des revendications 1 à 3, dans le circuit d'échappement d'un moteur (1) à combustion interne, comprenant des moyens réalisant une fonction d'oxydation dans la ligne d'échappement, un capteur (9) de température placé en aval desdits moyens d'oxydation et délivrant des informations à un calculateur électronique (4) de contrôle moteur pilotant entre autres le débit d'air et l'injection de carburant dans le moteur, **caractérisé en ce qu'**il comprend un comparateur (12) de la température (Tₑ) mesurée à l'échappement du moteur (1), par un capteur (9) en aval des moyens d'oxydation, réalisés par un filtre à particules catalytique, avec une température de consigne (T_{c}), l'écart (ε) entre ces deux valeurs étant envoyé à un régulateur (11) qui régule la quantité de carburant post-injecté (Qₚₒₛₜ) en fonction de cet écart afin que la température (Tₑ) délivrée par le capteur (9) tende vers la valeur de consigne (T_{c}), qui est déterminée par le calculateur (4).
